# EUROPÄISCHE PATENTSCHRIFT

(11) **EP 1 572 398 B1**
(45) Veröffentlichungstag und Bekanntmachung des Hinweises auf die Patenterteilung: **06.09.2006**
(21) Anmeldenummer: 03772236.0
(22) Anmeldetag: 18.10.2003
(51) Int. Cl.: B22D 1/00, C21C 5/52

(54) **GASSPÜLEINRICHTUNG FÜR METALLURGISCHE SCHMELZGEFÄSSE**
GAS FLUSHING DEVICE FOR METALLURGICAL MELTING POTS
DISPOSITIF DE PASSAGE DE GAZ POUR CREUSETS DE FONDERIE METALLURGIQUES

(30) Priorität: 19.12.2002 DE 10259434
(43) Veröffentlichungstag der Anmeldung: 14.09.2005
(73) Patentinhaber: Refractory Intellectual Property GmbH & Co. KG, 1100 Wien (AT)
(72) Erfinder: TAFERNER, Johannes, A-9562 Himmelberg (AT); WILPERNIG, Alfred, A-9545 Radenthein (AT); MAION, Romano, I-33026 Paluzza (IT)
(74) Vertreter: Becker, Thomas
(86) Internationale Anmeldenummer: PCT/EP2003/011575
(87) Internationale Veröffentlichungsnummer: WO 2004/056505

(56) Entgegenhaltungen:
- WO-A-92/10593
- US-A- 5 067 693
- PAWLISKA V ET AL: "UEBERBLICK UEBER DAS BODENSPUELEN IM ELEKTROOFEN" STAHL UND EISEN, VERLAG STAHLEISEN GMBH. DUSSELDORF, DE, Bd. 111, Nr. 8, 15. August 1991 (1991-08-15), Seiten 51-56,140, XP000222519 ISSN: 0340-4803
- RADEX-RUNDSCHAU, 1990, Seiten 195-202, XP009024136

## Beschreibung

Die Erfindung betrifft eine Gasspüleinrichtung für metallurgische Schmelzgefäße. Gasspüleinrichtungen sowie zugehörige Gasspülelemente, insbesondere Gasspülsteine, sind in zahlreichen Ausführungsformen seit Jahren bekannt und haben sich bewährt.

Diskrete Gasspülsteine können mit sogenannter gerichteter oder ungerichteter Porosität ausgebildet werden. Eine "gerichtete Porosität" wird beispielsweise durch Kanäle ausgebildet, die im Spülelement verlaufen. Eine "ungerichtete Porosität" kann durch ein poröses feuerfestes Material gebildet werden, welches entsprechend gasdurchlässig ist.

Gasspüleinrichtungen können wand- oder bodenseitig in eine feuerfeste Ausmauerung eines metallurgischen Schmelzgefäßes eingebaut werden. Sie können aber auch insitu im Boden oder einer Wand ausgebildet werden, wie beispielsweise in der EP 0 560 834 B1 beschrieben.

In der Zeitschrift "Stahl und Eisen 111 (1991) Nr. 8, 51,52" sowie in "Radex-Rundschau 1990, 195, 196" werden Spüler gezeigt, bei denen ein zylinderförmiger poröser Spülteil in einer zylinderförmigen äußeren Aufnahme eingemörtelt ist.

Gasspülelemente dienen in erster Linie der Durchführung von Gas. Teilweise werden aber auch Gas-/Feststoff-Gemische durch eine gattungsgemäße Gasspüleinrichtung geführt.

Als Gase können Inertgase verwendet werden, zum Beispiel beim Pfannenspülen. Es ist aber auch bekannt, beispielsweise bei Elektroöfen, mit Sauerstoff zu spülen.

Alle Gasspüleinrichtungen unterliegen einem erheblichen Verschleiß, insbesondere einem chemischen/korrosiven Angriff. Sie müssen deshalb regelmäßig ausgetauscht werden.

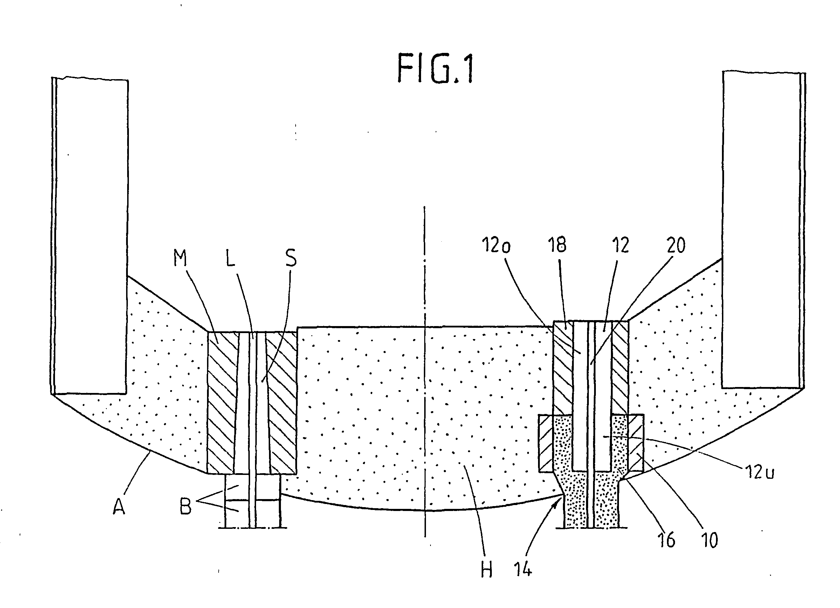

Figur 1 zeigt im linken Teil eine konventionelle Gasspüleinrichtung. Eine sogenannte Gasspüllanze L wird von außen in einen Bodenbereich H eines Elektroofens geführt und am Außenmantel A des Gefäßes mit Hilfe von Unterlagsscheiben B in Position gehalten und mit Hilfe eines Flansches befestigt. Anschließend wird ein Lochstein S über die Lanze L gesetzt und eine Masse zwischen Lochstein und Lanze gefüllt. Der Lochstein S wird anschließend mit Steinen M ummauert. Schließlich wird der Boden H mit einer Herdmasse zugestellt.

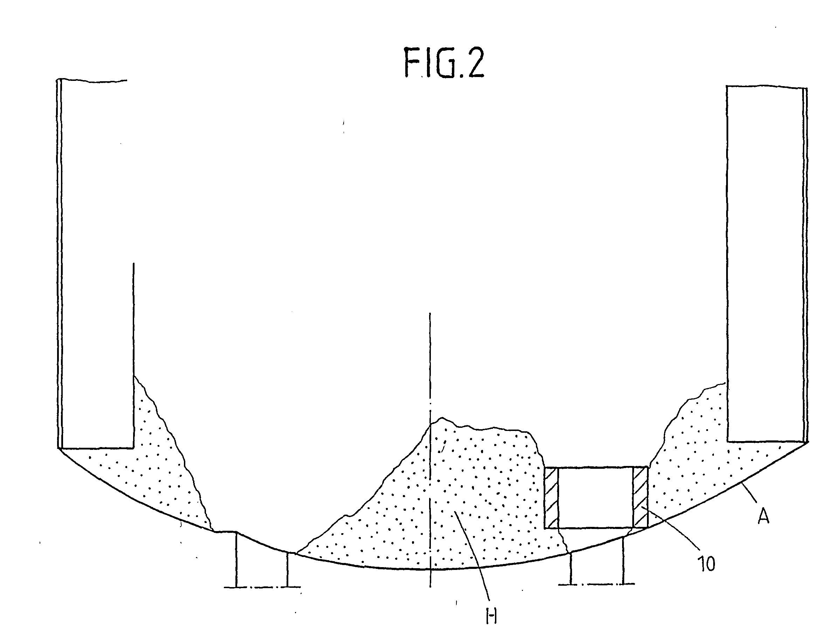

Ist die Gasspüleinrichtung verschlissen (in Figur 1 durch eine gestrichelte Linie angedeutet), muss die gesamte Spüleinrichtung ausgebrochen werden. Dies führt zu der in Figur 2 im linken Teil dargestellten Situation. Anschließend erfolgt der Einbau einer neuen Gasspüleinrichtung wie zuvor beschrieben.

Das Verfahren ist sehr zeitaufwendig und es muss nahezu die gesamte Herdbaumasse des Bodens und vor allem bis zum Außenmantel A ausgebrochen werden.

Entsprechend liegt der Erfindung die Aufgabe zugrunde, eine Gasspüleinrichtung anzubieten, die im Verschleißfall schneller und preiswerter zu wechseln ist.

Der Erfindung liegt der Gedanke zugrunde, die Teile der Gasspüleinrichtung, die einem besonderen Verschleiß unterliegen, das sind die Teile der Gasspüleinrichtung, die der Schmelze benachbart sind, also die Teile, die sich am gasauslaßseitigen Ende befinden, von den Teilen zu trennen, die dahinter angeordnet sind, also in Richtung auf das gaseinlaßseitige Ende.

Im Verschleißfall können dann Einzelteile der Gasspüleinrichtung bleiben und es brauchen nur die wirklichen Verschleißzonen beziehungsweise Verschleißteile ausgetauscht zu werden.

Ein weiterer Gesichtspunkt ist, das eigentliche Spülelement in dem Abschnitt, der der Wand des Schmelzgefäßes benachbart ist, in einer monolithischen Masse zu konfektionieren. Die Masse erleichtert beim Einbau des Spülers eine Ausrichtung des Spülelementes. Beim Abriss des Spülers ist sie leichter auszubrechen und zu erneuern. Diese Masse kann wiederum in einer permanenten Aufnahme konfektioniert sein, die beim Spülerwechsel nicht erneuert wird.

Danach betrifft die Erfindung in ihrer allgemeinsten Ausführungsform eine Gasspüleinrichtung für metallurgische Schmelzgefäße mit den Merkmalen von Anspruch 1.

"Zylinderförmig" bedeutet nur, dass es sich um einen an gegenüberliegenden Abschnitten offenen Körper zur Aufnahme eines anderen Körpers handelt und umfasst keine sonstigen geometrischen Beschränkungen.

Die untere Aufnahme, die im normalen Betrieb keinem Verschleiß unterliegt, kann mit feuerfesten Steinen oder einer feuerfesten Masse (Herdmasse) umgeben werden, die ebenfalls im Verschleißfall als Dauerfutter verbleibt. Sie dient der Aufnahme einer feuerfesten keramischen Masse, beispielsweise einer Stampfmasse, die gleichzeitig der Justierung des Spülelementes (Spülsteins) dient, wenn dieser in der unteren Aufnahme ausgerichtet und dabei mit der Masse umfüllt wird. Praktisch in Verlängerung der unteren Aufnahme (in Strömungsrichtung eines Gases beziehungsweise in Richtung auf die Metallschmelze) schließt sich die obere zylinderförmige Aufnahme an, die beispielsweise einen inneren Kreisquerschnitt aufweist und den Spüler mehr oder weniger unmittelbar umgibt und damit eine mechanische Führung sowie einen chemischen Verschleißschutz schafft.

Der Spülstein kann bündig oder mit geringem Spiel in der oberen Aufnahme (also "heißseitig") angeordnet werden. Er kann in der oberen Aufnahme auch verklebt oder vermörtelt werden.

Der Spülstein wird sich in der Regel über die gesamte Höhe der unteren und oberen Aufnahme erstrecken. Er kann auch die obere Aufnahme um ein geringes Stück überragen (bei der Neuzustellung). Am anderen Ende ist der Gasanschluss und ggf. eine Gasverteilkammer, die das Gas auf einzelne Kanäle oder Poren verteilt.

Der Spüler (das Spülelement) kann einen Kreisquerschnitt aufweisen. Ebenso sind aber auch kegelstumpfförmige Gasspülelemente oder quaderförmige Geometrien möglich. Bei einem quaderförmigen Spülelement wird die obere Aufnahme entsprechend einen rechteckigen Querschnitt aufweisen.

Insoweit ist der Begriff "zylinderförmige Aufnahme" dahingehend zu verstehen, dass eine Umrahmung für eine bestimmte Länge des Gasspülelementes geschaffen wird, unabhängig von dessen Innenquerschnitt. Der Außenquerschnitt ist beliebig.

Mindestens eine Aufnahme kann als gepresstes Formteil ausgeführt sein. Gepresste Umrahmungsteile für das Spülelement sind besonders dicht und damit Verschleißfest.

Der Spüler selbst kann mit gerichteter oder ungerichteter Porosität ausgebildet werden. Insbesondere zum Spülen mit Sauerstoff bei Elektroöfen werden Spüler mit gerichteter Porosität eingesetzt. Dazu kann der Spüler in Axialrichtung mit mehreren rohrförmigen Kanälen ausgebildet sein, beispielsweise Metall- oder Keramikröhrchen. Der Spüler kann mit einer zusätzlichen Lanze ausgerüstet sein (getrennte Gaszuführung für Spüler und Lanze) oder nur aus einer feuerfest ummantelten Lanze bestehen.

Je nach Anwendungsfall und zu erwartendem Verschleiß wird die Länge der oberen Aufnahme bestimmt, denn nur sie soll später ausgewechselt werden.

In einer Ausführungsform ist die obere Aufnahme mindestens so lang wie die untere Aufnahme. Die obere Aufnahme kann aber auch bis zu viermal so lang wie die untere Aufnahme ausgebildet sein, jeweils in Axialrichtung des Spülelementes, also in Strömungsrichtung des Gases betrachtet. Beispielsweise ist die obere Aufnahme zwei- bis dreimal so lang wie die untere Aufnahme.

Die obere Aufnahme kann eine Querschnittsform aufweisen, die es ermöglicht, die obere Aufnahme unmittelbar auf der unteren Aufnahme zu platzieren. Die obere Aufnahme kann aber auch eine Wandstärke besitzen, die der Wandstärke der feuerfesten Masse entspricht, die zwischen Spülelement und unterer Aufnahme eingebracht wird, wie in der nachfolgenden Figurenbeschreibung dargestellt.

Üblicherweise genügt es, die obere Aufnahme mit einem Außenquerschnitt auszubilden, der kleiner ist als der Außenquerschnitt der unteren Aufnahme, so dass sich für die Gasspüleinrichtung insgesamt ein abgestufter Querschnitt ergibt, wie ebenfalls im rechten Teil der Figuren 1, 2 dargestellt wird. Es sind auch Ausführungsformen möglich, bei denen die obere Aufnahme im Abstand vor der unteren Aufnahme endet.

Die beschriebene Gasspüleinrichtung eignet sich zum Einbau in einen Boden oder eine Wand eines metallurgischen Schmelzgefäßes. Der Begriff "metallurgisches Schmelzgefäß" umfasst sämtliche Gefäße, in denen eine Metallschmelze gebildet beziehungsweise behandelt wird. Die Gasspüleinrichtung eignet sich damit auch zum Einbau in einen Herdboden eines Elektroofens, beispielsweise eines Elektro-Lichtbogenofens.

Weitere Merkmale der Erfindung ergeben sich aus den Merkmalen der Unteransprüche sowie den sonstigen Anmeldungsunterlagen. Hierzu gehört die Mehrteiligkeit einer oder beider Aufnahmen.

Die Erfindung wird nachstehend anhand eines Ausführungsbeispieles dargestellt, welches jeweils im rechten Teil der Figuren 1, 2 jeweils im Schnitt und schematisch dargestellt ist.

Dabei besteht die Gasspüleinrichtung insgesamt aus vier Teilen. Bei der Zustellung wird als erstes eine untere Aufnahme 10 eingesetzt. Hierbei handelt es sich um einen ringförmigen, gepressten feuerfesten Umrahmungsblock. Anschließend wird ein Spüler 12 mit gerichteter Porosität (Kanäle 20) von unten (von außen) durch eine Öffnung 14 in der Außenwand A zugeführt und sein Abschnitt 12u mit Hilfe einer Stampfmasse 16 innerhalb der unteren Umrahmung 10 sowie dem darunter befindlichen Bereich zentriert. Der Spüler 12 überragt mit seinem gasauslaßseitigen Ende 12o die untere Aufnahme 10 beziehungsweise die Masse 16. Auf den oberen Spülerabschnitt 12o wird danach eine obere Aufnahme 18 aufgeschoben, die wie die untere Aufnahme 10 zylinderförmig gestaltet ist, und zwar mit einem Innenquerschnitt, der dem Außenquerschnitt des Spülers 12 entspricht. Die obere Aufnahme 18 verläuft fluchtend zu dem mit Masse 16 verfüllten Ringkanal zwischen unterer Aufnahme 10 und Spüler 12. Die obere Aufnahme 18 ist doppelt so lang wie die untere Aufnahme 10. Zum Abschluss wird die Herdmasse H eingebracht und der Herdboden ausgebildet.

Der Bereich unterhalb der unteren Aufnahme 10 kann alternativ zur dargestellten Ausführungsform auch mit Befestigungselementen B, beispielsweise Unterlegscheiben, analog dem Stand der Technik (wie im linken Teil der Figuren 1, 2 dargestellt) bestückt werden, um den Spüler 12 an der Außenwand A des Schmelzgefäßes zu fixieren.

Die Zustellzeit für die im rechten Teil der Figuren 1, 2 dargestellte Gasspüleinrichtung beträgt ca. eine Stunde.

Demgegenüber beträgt die Zustellzeit im Stand der Technik, wie im linken Teil der Figuren 1, 2 dargestellt, ca. 2,5 Stunden. Ein weiterer Vorteil der erfindungsgemäßen Gasspüleinrichtung besteht darin, dass im Verschleißfall (Figur 2) die untere Aufnahme 10 bestehen bleiben kann. Auch können die der Außenwand A benachbarten Zonen der Herdmasse H in weiten Teilen erhalten bleiben, wodurch weniger neue Herdmasse benötigt wird.

## Patentansprüche

1. Gasspüleinrichtung für metallurgische Schmelzgefäße mit folgendem Aufbau:
1.1 ein Spülstein (12) ist an seinem gasauslassseitigen Ende (12o) in einer oberen zylinderförmigen Aufnahme (18) und an seinem daran anschließenden Abschnitt (12u) in einer unteren zylinderförmigen Aufnahme (10) angeordnet,
1.2 die obere Aufnahme (18) weist einen Außenquerschnitt auf, der größer ist als der Innenquerschnitt der unteren Aufnahme (10),
1.3 zumindest zwischen unterer Aufnahme (10) und Spülstein (12) ist ein Ringraum vorhanden, der mit einer Masse (16) verfüllt ist, wobei
1.4 Spülstein (12), Aufnahmen (10, 18) und Masse (16) aus einem feuerfesten keramischen Werkstoff bestehen,
1.5 der Spülstein (12) ist bündig oder mit geringem Spiel in der oberen Aufnahme (18) angeordnet.

2. Gasspüleinrichtung nach Anspruch 1, deren Spülstein (12) sich über die gesamte Höhe von unterer und oberer Aufnahme (10, 18) erstreckt.

3. Gasspüleinrichtung nach Anspruch 1, deren Spüler (12) einen Kreisquerschnitt aufweist.

4. Gasspüleinrichtung nach Anspruch 1, bei der mindestens eine Aufnahme (10, 18) ein gepresstes Formteil ist.

5. Gasspüleinrichtung nach Anspruch 1, deren Spüler (12) eine gerichtete Porosität aufweist.

6. Gasspüleinrichtung nach Anspruch 1, deren Spüler (12) in Axialrichtung von mehreren Metall oder Keramikröhrchen (20) zur Ausbildung einer gerichteten Porosität durchzogen ist.

7. Gasspüleinrichtung nach Anspruch 1, deren obere Aufnahme (18) mindestens so lang ist wie die untere Aufnahme (10).

8. Gasspüleinrichtung nach Anspruch 1, deren obere Aufnahme (18) 1,1 bis 10 mal so lang ist wie die untere Aufnahme (10).

9. Gasspüleinrichtung nach Anspruch 1, deren obere Aufnahme (18) 2 bis 3 mal so lang ist wie die untere Aufnahme (10).

10. Gasspüleinrichtung nach Anspruch 1, bei der die obere Aufnahme (18) auf der unteren Aufnahme (10) aufliegt.

11. Gasspüleinrichtung nach Anspruch 1, deren obere Aufnahme (18) einen Außenquerschnitt aufweist, der kleiner ist als der Außenquerschnitt der unteren Aufnahme (10).

12. Gasspüleinrichtung nach Anspruch 1, bei der die obere Aufnahme (18) in die untere Aufnahme (10) hineinragt.

13. Gasspüleinrichtung nach Anspruch 1, deren Masse (16) eine Stampfmasse ist.

14. Gasspüleinrichtung nach Anspruch 1, bei der mindestens eine der Aufnahmen (10, 18) mehrteilig ist.

15. Verwendung einer Gasspüleinrichtung nach einem der Ansprüche 1 bis 14 zum Einbau in einen Boden (H) eines metallurgischen Schmelzgefäßes.

16. Verwendung einer Gasspüleinrichtung nach einem der Ansprüche 1 bis 14 zum Einbau in einen Herdboden (H) eines Elektroofens.

## Claims

1. A gas purging device for metallurgical melting vessels with the following characteristics:
1.1 a gas purging brick (12) is arranged in an upper cylindrical receptacle (18) with its end (12o) on the gas outlet side and in a lower cylindrical receptacle (10) with its adjacent section (12u),
1.2 the upper receptacle (18) has an outer cross-section which is larger than the inner cross-section of the lower receptacle (10),
1.3 an annular space provided at least between the lower receptacle (10) and the gas purging brick (12) is filled with a mass (16), wherein
1.4 the gas purging brick (12), the receptacles (10, 18) and the mass (16) are made of a refractory ceramic material,
1.5 the purging brick (12) is arranged in a flush manner or with slight clearance within the upper receptacle (18).

2. The gas purging device according to Claim 1, the gas purging brick (12) of which extends over the entire height of the lower and the upper receptacle (10, 18).

3. The gas purging device according to Claim 1, the gas purging brick (12) of which has a circular cross section.

4. The gas purging device according to Claim 1, wherein at least one receptacle (10, 18) is realized in the form of a pressed part.

5. The gas purging device according to Claim 1, the gas purging brick (12) of which has a directed porosity.

6. The gas purging device according to Claim 1, the gas purging brick (12) of which comprises several small metal or ceramic tubes (20) that extend in the axial direction and serve for achieving a directed porosity.

7. The gas purging device according to Claim 1, the upper receptacle (18) of which is at least as long as the lower receptacle (10).

8. The gas purging device according to Claim 1, the upper receptacle (18) of which is 1.1-times to 10-times as long as the lower receptacle (10).

9. The gas purging device according to Claim 1, the upper receptacle (18) of which is 2-times to 3-times as long as the lower receptacle (10).

10. The gas purging device according to Claim 1, wherein the upper receptacle (18) lies on the lower receptacle (10).

11. The gas purging device according to Claim 1, the upper receptacle (18) of which has an outside cross section that is smaller than the outside cross section of the lower receptacle (10).

12. The gas purging device according to Claim 1, wherein the upper receptacle (18) protrudes into the lower receptacle (10).

13. The gas purging device according to Claim 1, the mass (16) of which is a ramming mass.

14. The gas purging device according to Claim 1, wherein at least one of the receptacles (10, 18) comprises more than one part.

15. Use of a gas purging device according to one of Claims 1-14 for installation in the bottom (H) of a metallurgical melting vessel.

16. Use of a gas purging device according to one of Claims 1-14 for installation in the hearth bottom (H) of an electric furnace.

## Revendications

1. Dispositif de lavage de gaz pour des récipients de fusion métallurgique comprenant la structure suivante :
1.1 une pierre de lavage (12) est disposée sur son extrémité (12o) côté évacuation du gaz dans un logement (18) supérieur de forme cylindrique et sur sa partie (12u) s'y raccordant dans un logement (10) inférieur de forme cylindrique,
1.2 le logement (18) supérieur présente une section extérieure qui est supérieure à la section inférieure du logement (10) inférieur,
1.3 entre le logement (10) inférieur et la pierre de lavage (12) existe au moins un espace annulaire qui est rempli avec une masse (16),
1.4 la pierre de lavage (12), des logements (10, 18) et de la masse (16) étant à base d'un matériau céramique réfractaire,
1.5 la pierre de lavage (12) est disposée à fleur ou avec un faible jeu dans le logement (18) supérieur.

2. Dispositif de lavage de gaz selon la revendication 1, dont la pierre de lavage (12) s'étend sur toute la hauteur du logement inférieur et du logement supérieur (10, 18).

3. Dispositif de lavage de gaz selon la revendication 1, dont le laveur (12) présente une section circulaire.

4. Dispositif de lavage de gaz selon la revendication 1, sur lequel au moins un logement (10, 18) est une pièce moulée pressée.

5. Dispositif de lavage de gaz selon la revendication 1, dont le laveur (12) présente une porosité dirigée.

6. Dispositif de lavage de gaz selon la revendication 1, dont le laveur (12) est traversé dans le sens axial par plusieurs petits tubes en métal ou en céramique (20) pour la réalisation d'une porosité dirigée.

7. Dispositif de lavage de gaz selon la revendication 1, dont le logement (18) supérieur est au moins aussi long que le logement (10) inférieur.

8. Dispositif de lavage de gaz selon la revendication 1, dont le logement (18) supérieur est 1,1 jusqu'à dix fois aussi long que le logement (10) inférieur.

9. Dispositif de lavage de gaz selon la revendication 1, dont le logement (18) supérieur est 2 à 3 fois aussi long que le logement (10) inférieur.

10. Dispositif de lavage de gaz selon la revendication 1, sur lequel le logement (18) supérieur repose sur le logement (10) inférieur.

11. Dispositif de lavage de gaz selon la revendication 1, dont le logement (18) supérieur présente une section extérieure qui est inférieure à la section extérieure du logement (10) inférieur.

12. Dispositif de lavage de gaz selon la revendication 1, sur lequel le logement (18) supérieur dépasse à l'intérieur du logement (10) inférieur.

13. Dispositif de lavage de gaz selon la revendication 1, dont la masse (16) est un pisé.

14. Dispositif de lavage de gaz selon la revendication 1, sur lequel au moins un des logements (10, 18) est en plusieurs parties.

15. Utilisation d'un dispositif de lavage de gaz selon l'une quelconque des revendications 1 à 14 pour le montage dans un fond (H) d'un récipient de fusion métallurgique.

16. Utilisation d'un dispositif de lavage de gaz selon l'une quelconque des revendications 1 à 14 pour le montage dans un fond (H) d'un four électrique.
